Europäisches Patentamt

European Patent Office

Office européen des brevets

(19)

(11) Veröffentlichungsnummer: **0 217 971**
**B1**

# EUROPÄISCHE PATENTSCHRIFT

(12)

(45) Veröffentlichungstag der Patentschrift:
**28.12.88**

(51) Int. Cl.⁴: **F 16 C 29/06**

(21) Anmeldenummer: **85112399.2**

(22) Anmeldetag: **01.10.85**

(54) **Linearlager für unbegrenzte Längsbewegungen.**

(43) Veröffentlichungstag der Anmeldung:
**15.04.87 Patentblatt 87/16**

(45) Bekanntmachung des Hinweises auf die Patenterteilung:
**28.12.88 Patentblatt 88/52**

(84) Benannte Vertragsstaaten:
**CH DE FR GB IT LI SE**

(56) Entgegenhaltungen:
**DE-A- 3 342 479**
**DE-A- 3 400 849**

(73) Patentinhaber: **SRO Kugellagerwerke J. Schmid-Roost AG, Oerlikonerstrasse 70, CH-8050 Zurich (CH)**

(72) Erfinder: **Borel, Denis, Rosenbergstrasse 51, CH-8304 Wallisellen (CH)**

(74) Vertreter: **Rehmann, Klaus H., Postfach 1310 Hauptbahnhofstrasse, D-8720 Schweinfurt (DE)**

## Beschreibung

Die Erfindung bezieht sich auf ein Linearlager für unbegrenzte Längsbewegungen nach dem Oberbegriff des Anspruchs 1.

Linearlager der angegeben Art sind bereits seit langem in verschiedenen Ausführungen bekannt und in Benutzung. Bei einer Bewegung des Gehäuses gegenüber der Laufschiene laufen dabei die Wälzkörper in den geschlossenen Umlaufbahnen um, wobei sie in den Lastzonen unter idealen Verhältnissen abrollen und auch in der Rücklaufzone keine besonderen Schwierigkeiten auftreten. Probleme bestehen aber in den Umlenkbereichen, und zwar insbesondere dort, wo die Wälzkörper die Lastzone verlassen. Hier besitzen sie nämlich die Drehrichtung aus der Lastzone. Die Umlenkeinrichtung steht aber gegenüber den Wälzkörpern still, wodurch ein Abrollen in entgegengesetzter Drehrichtung veranlasst wird. Letzteres bewirkt, dass die Wälzkörper zunächst abgebremst werden und letzlich ihre Drehrichtung ändern, was zu erheblichen Reibungsverlusten führt. Dieser Vorgang wiederholt sich, wenn die Schwerkraft unberücksichtigt bleibt, auch beim Einlaufen der Wälzkörper aus der Umlenkeinrichtung auf die Laufschiene. Diese Schwierigkeiten werden noch dadurch erhöht, dass bei schneller Längsbewegung die Wälzkörper wegen ihrer Fliehkraft unter zusätzlicher Belastung auf die Umlenkeinrichtung gedrückt werden, wodurch die Reibungsverluste weiter steigen.

Diese Nachteile besitzt auch der Gegenstand der DE-A-3 342 479. Hierin werden nämlich die Rollen im Umlenkbereich ebenfalls gezwungen ihre Drehrichtung zu ändern, und zwar weil ihre Drehachsen nur leicht verschwenkt werden, im übrigen aber nach dem Verlassen der Lastzone auf eine stillstehende Seitenplatte treffen, die eine Drehrichtungsänderung bewirkt.

Es ist daher Aufgabe der Erfindung diesen Anteil der Zwangsreibung in den Umlenkbereichen ganz zu vermeiden bzw. die Gesamtreibungsverluste in diesen Bereichen wesentlich zu reduzieren.

Die Lösung dieser Aufgabe ist im kennzeichnenden Teil des Anspruchs 1 angegeben. Die Ansprüche 2 bis 8 enthalten spezielle Ausgestaltungen.

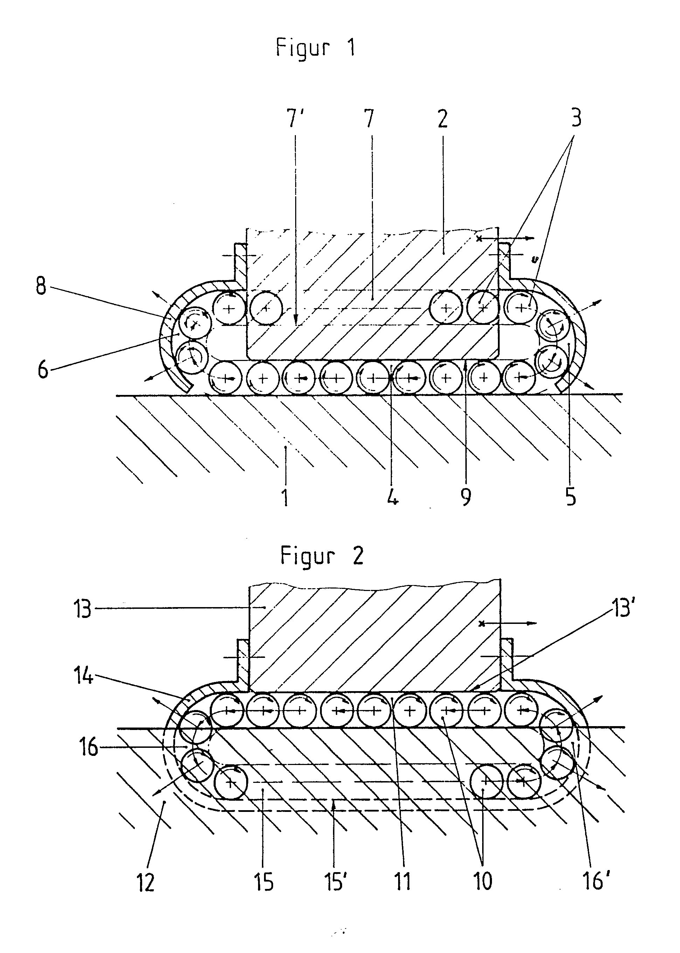

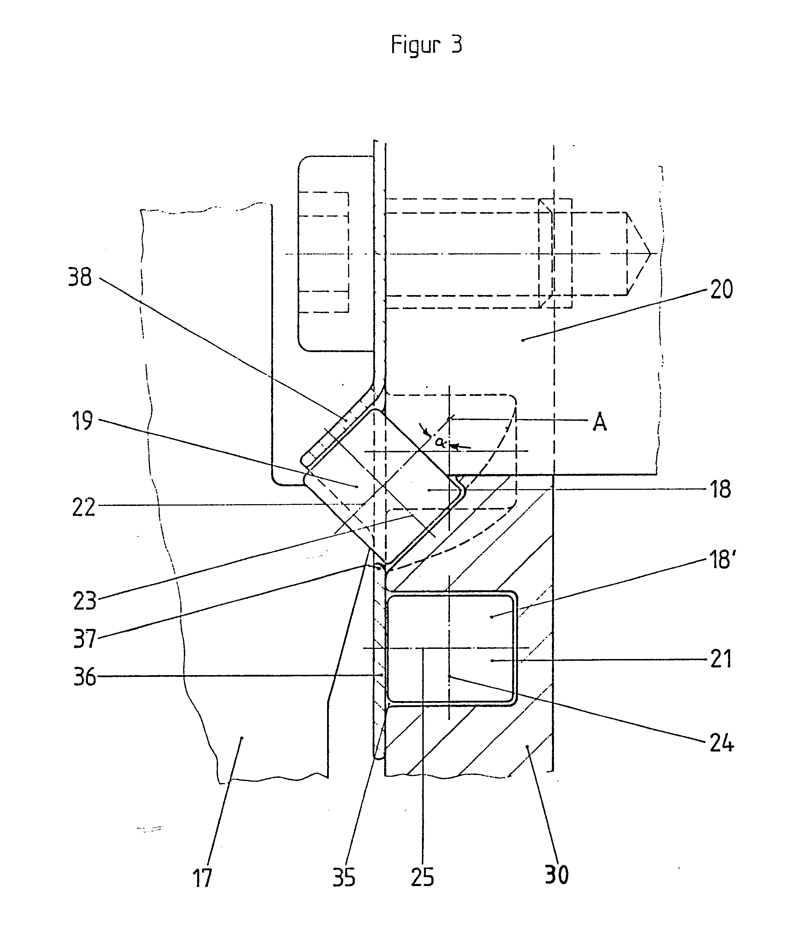

Das Problem wird dadurch gelöst, dass die Wälzkörper auch im Umlenkbereich in der gleichen Drehrichtung weiter rollen können wie in der Lastzone. Erforderlich ist dazu das Merkmal a aus dem Anspruch 1. Dadurch, dass die am Gehäuse in der Lastzone angebrachte Laufbahn auf der äusseren Hüllkurve liegt (s. Fig. 2), tritt im Gegensatz zu den Ausführungen nach dem Stand der Technik, wo die in der Lastzone angebrachte Laufbahn auf der inneren Hüllkurve angeordnet ist (s. Fig. 1), keine Umkehrung der Drehrichtung der Rollen mehr ein. Aus Raumgründen ist es lediglich erforderlich, dass die Wälzkörper entsprechend Merkmal b aus der Lastzone herausgeführt werden. Dadurch gelangen die Rollen in Bereiche nahe der Laufschiene, in denen ein Rücklauf möglich ist.

Um die Gesamtreibungsverluste in den Umlenkbereichen zu minimieren, ist eine Rückführung der Wälzkörper unter dem Winkel α nach Merkmal c notwendig. Es ergibt sich so ein reibungsmässig günstiger Schwenkwinkel der Rollen mit geringem Platzbedarf.

Die beschriebenen Massnahmen bewirken einen ruhigen Lauf der Wälzkörper. Weiterhin werden die Reibungskräfte reduziert und damit der Energieverbrauch. All dies bewirkt eine Verlängerung der Lebensdauer der Lagerung. Dabei werden bezogen auf den Raumbedarf hohe Tragzahlen bei geringer Masse erreicht.

Der Übergang der Rollen von der Lastzone in die Rücklaufzone ist dann reibungsmässig am günstigsten, wenn sich nach einer bevorzugten Ausführung im Anschluss an den ungefähr schraubenförmig gekrümmten Teilbereich der Umlenkzone ein zweidimensional gekrümmter Abschnitt anschliesst. Durch den schraubenlinienförmigen Teilbereich und den zweidimensional gekrümmten Abschnitt wird erreicht, dass ein kontinuierlicher Übergang von der Lastzone in die Rücklaufzone erfolgt. Letzteres wird dadurch begünstigt, dass die Drehachsen der Rollen im zweidimensional gekrümmten Abschnitt die gleiche Richtung besitzen wie in der Rücklaufzone.

Konstruktiv und reibungsmässig am günstigten sind die Verhältnisse dann, wenn nach einer weiteren Ausgestaltung der Erfindung die neben der Lastzone vorgesehene Rückführung der Rollen unter einem Winkel α von 40 bis 50° gegenüber der Lastzone erfolgt. Es ergeben sich dann weiterhin bei üblichen Umlenkradien und Rollendurchmessern eine günstige Länge der geschlossenen Rollenumläufe und optimal genutzte Räume.

Die reibungsgünstige Führung des Rollenumlaufes nach dieser Erfindung kann nicht nur bei einer Umlaufbahn vorgesehen werden, sondern es sind nach einer weiteren bevorzugten Ausführung auch Konstruktionen möglich, bei denen vier Umläufe mit Rollen vorgesehen sind, wobei die Rollen mit ihren Drehachsen auch ein X bilden können. Diese Ausführung war bei den bisherigen Linearlagern, bei denen der Rücklauf der Rollen hinter der Lastzone im Gehäuse erfolgt, nicht möglich. Der Stand der Technik zeigt daher nur 0-Anordnungen mit grossem Platzbedarf.

Sowohl bei X- als auch bei 0-Anordnungen ergibt sich ein grosser Raumgewinn. Dies wird dadurch möglich, dass der Rücklauf der Rollen so nahe wie möglich an der Laufschiene erfolgt und nicht mehr durch das Gehäuse. Nach einer weiteren bevorzugten Ausführung erfolgt daher die Anordnung der Rollen-Umläufe innerhalb des Hauptquerschnitts der Laufschiene.

Damit sich eine zum Zwecke der einfachen Herstellung und der Inspektion leicht demontierbare Lagerung ergibt, sind nach einer weiteren Ausgestaltung der Erfindung die in Käfigen angebrachten Rücklaufbahnen mit einseitigen Öffnungen versehen. Bei entfernter Laufschiene können die Rollen problemlos herausgenommen werden.

Wegen der Öffnungen können die Rollen aber auch herausfallen. Es ist daher zweckmässig leicht abnehmbare Haltebleche vorzusehen, mit deren Hilfe die Öffnungen ganz oder teilweise verschlossen werden können.

Um auch die Rollen in der Lastzone am Herausfallen zu hindern, was bei weggenommener Laufschiene möglich ist, können diese Haltebleche mit verlängerten und/oder abgebogenen Halteabschnitten versehen sein, die die Rollen umgreifen. Ausserhalb der Laufbahnbereiche sind grössere Halteabschnitte möglich, innerhalb nur kleine.

Die Erfindung wird anhand von sechs Figuren näher erläutert.

Fig. 1 zeigt eine Ausführung nach dem Stand der Technik schematisch im Längsschnitt,

Fig. 2 zeigt eine Ausführung gemäss der Erfindung schematisch im Längsschnitt,

Fig. 3 zeigt einen Teilausschnitt eines Linearlagers im Querschnitt,

Fig. 4 zeigt einen Querschnitt durch ein Linearlager mit vier Rollenumläufen,

Fig. 5 zeigt eine Ansicht mit teilweisem Längsschnitt einer Ausführung nach Fig. 4,

Fig. 6 zeigt eine perspektivische Darstellung eines Linearlagers nach Figuren 4 bzw. 5 ohne Gehäuse.

In Fig. 1 wird die Ausführung eines Linearlagers im Schema gezeigt, wie sie bisher üblich war. Zwischen der Laufschiene 1 und dem Gehäuse 2 sind die Rollen 3 angeordnet, wobei der geschlossene Rollenumlauf aus der Lastzone 4, den beiden Umlenkbereichen 5 und 6 und der Rücklaufzone 7 besteht.

In der Lastzone erhalten die Rollen 3 eine bestimmte Drehrichtung. Sobald sie in den Umlenkbereich 6 gelangen, werden sie von dem Umlenkblech 8 zum Gehäuse 2 hin abgelenkt. Wegen der Umlenk- und Fliehkräfte kommen sie dabei nur am Umlenkblech 8 zur Anlage. Dieses steht aber gegenüber den Rollen 3 still. Letztere werden daher zunächst abgebremst und dann zu einem Drehrichtungswechsel veranlasst, was Reibungsverluste bewirkt. In der Rücklaufzone 7 werden die Rollen 3 wegen der nach unten wirkenden Schwerkraft an der unteren Laufbahn 7' zur Anlage kommen. Dies bewirkt wieder eine Drehrichtungsänderung mit Reibungsverlusten. Die Folge davon ist, dass im Umlenkbereich 5 eine weitere nachteilige Drehrichtungsänderung erfolgen muss, bevor die Rollen 3 wieder in die Lastzone 4 gelangen. Hier liegt die am Gehäuse 2 in der Lastzone 4 angebrachte Laufbahn 9 auf der inneren Hüllkurve eines jeden Rollenumlaufs, wobei diese Hüllkurve aus den Laufbahnen 7' und 9 und den sie verbindenden inneren Umlenkkurven besteht.

In Figur 2 wird im Schema der Rollenumlauf ohne die nachteiligen Drehrichtungsänderungen gezeigt. Die Rollen 10 in der Lastzone 11 zwischen der Laufschiene 12 und dem Gehäuse 13 werden bei Anlage an das Umlenkblech 14, das ebenfalls am Gehäuse 13 befestigt ist, nicht gezwungen ihre Drehrichtung zu ändern. Die Abrollverhältnisse setzen sich nämlich kontinuierlich fort. Das gleiche gilt für die Rücklaufzone 15, wenn die Schwerkraft nach unten wirkt, und auch für den Umlenkbereich 16'.

Dies ist die Folge des Umstands, dass die am Gehäuse 13 in der Lastzone 11 angebrachte Laufbahn 13' auf der äusseren Hüllkurve eines jeden Rollenumlaufs liegt, wobei die äussere Hüllkurve aus den beiden Laufbahnen 13' und 15' sowie den sie verbindenden äusseren Hüllkurven besteht.

In Fig. 3 wird ein Teilquerschnitt eines erfindungsgemässen Linearlagers gezeigt. Die Laufschiene 17 wird hier über die Rollen 18 in der Laufzone 19 im Gehäuse 20 gelagert. Über nur teilweise angedeutete Umlenkbereiche gelangen die in Käfigen 30 geführten Rollen 18' in die Rücklaufzone 21. Dabei schneiden sich die Schnittebene 22, die durch die Rollenmitte senkrecht zu den Rollendrehachsen 213 aller tragenden Rollen 18 geht, und die Schnittebene 24, die durch die Rollenmitte senkrecht zu den Rollendrehachsen 25 aller Rollen 18' in der Rücklaufzone 21 geht, längs der mit A bezeichneten Achse und der Winkel α, der von der Schnittebene 22 und der Schnittebene 24 gebildet wird, liegt dabei zwischen 40° und 50°. Dies bewirkt eine Rückführung der Rollen auf kurzem Weg unter Vermeidung zusätzlicher Verdrehung der Rollen.

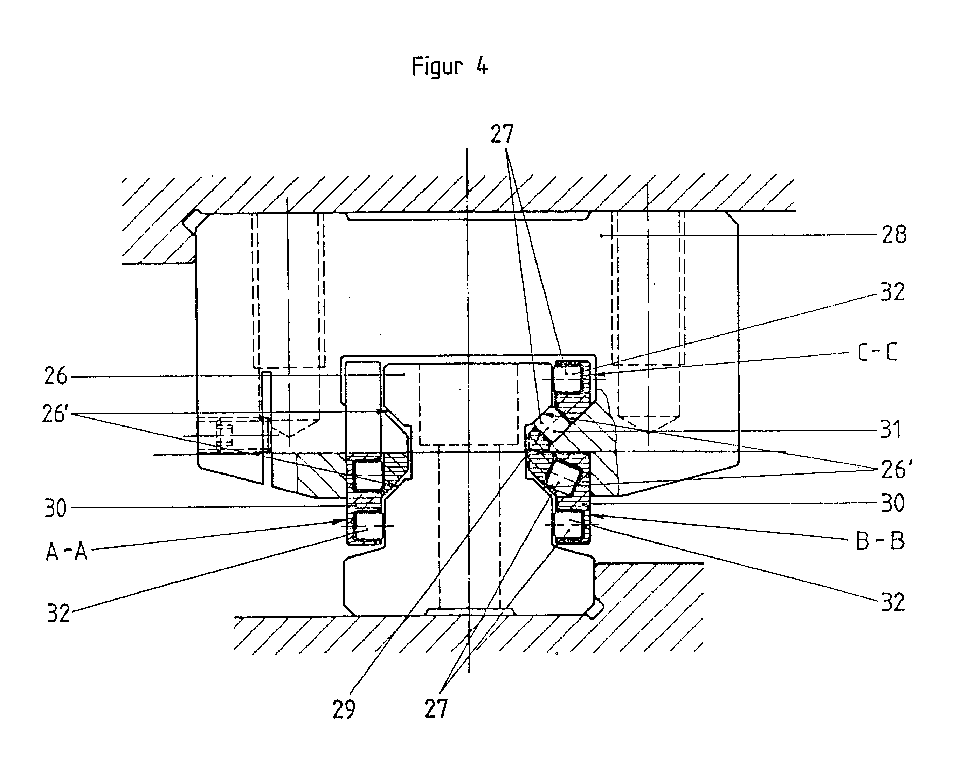

In Fig. 4 erfolgt die Darstellung eines Linearlagers mit vier Rollenumläufen im Querschnitt. Die Laufschiene 26 besitzt hier vier Laufbahnen 26' im Lastbereich. Mit Hilfe der nur teilweise gezeigten, in Käfigen 30 geführten Rollen 27 erfolgt eine allseitig stützende Lagerung im Gehäuse 28, wobei die Rollen 27 mit Drehachsen 29 in den Lastzonen eine X-förmige Gestalt bilden.

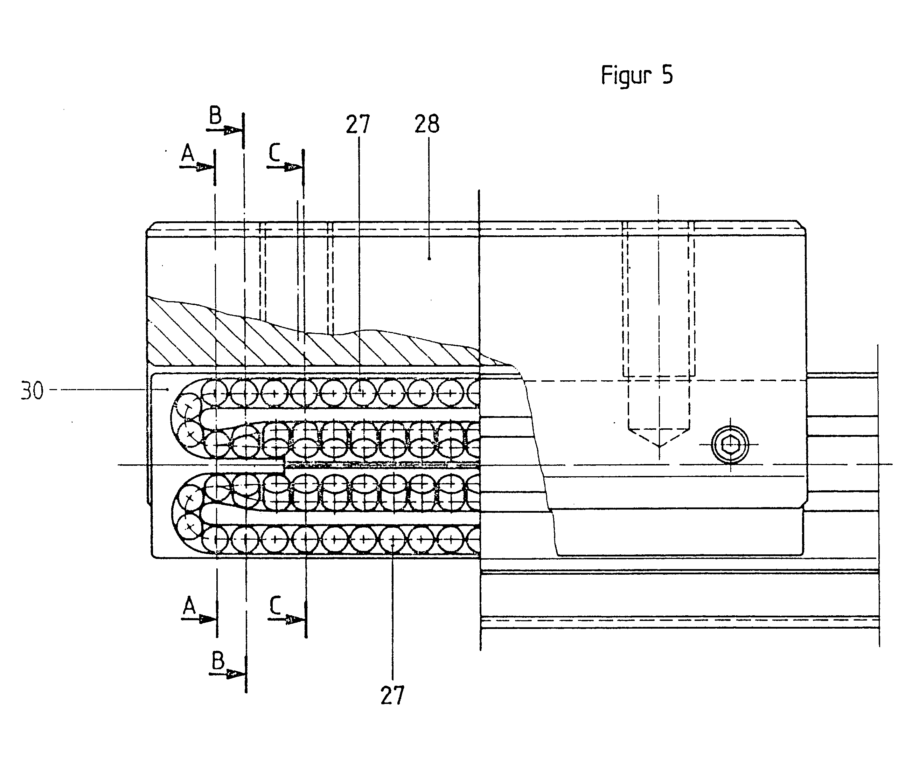

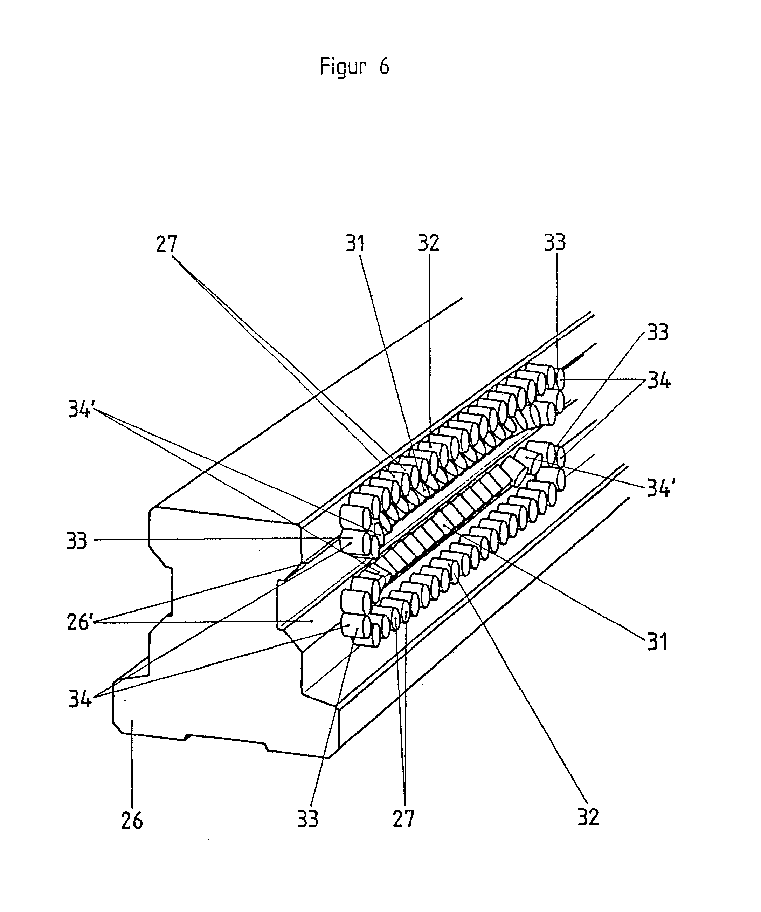

Die Lage der drei gezeigten Teilquerschnitte A-A, B-B und C-C ist aus dem Längsschnitt der Fig. 5 ersichtlich. Die Fig. 6 zeigt das gleiche Lager, bei dem aber nur die Laufschiene 26 und die Rollen 27 dargestellt sind. Hier sind für zwei Rollenumläufe die einzelnen Zonen und die Lage der Rollen 27 im Raum besser erkenntlich. Auf den Laufbahnen 26' der Laufschiene 26 laufen die Rollen 27 in den Lastzonen 31, während die Rücklaufzonen 32 versetzt und verdreht dazu angeordnet sind. Die Umlenkbereiche 34 bestehen aus den ungefähr schraubenlinienförmig gekrümmten Teilbereichen 34' und den zweidimensional gekrümmten Abschnitten 33, die in die Rücklaufzonen 32 übergehen. Wie insbesondere aus Fig. 4 ersichtlich ergibt sich durch den beschriebenen Aufbau eine kompakte Ausführung, und zwar in der Weise, dass alle vier Umläufe innerhalb des Hauptquerschnitts der Führungsschiene 26 angeordnet werden können. Der grosse Raumbedarf für die Rücklaufzonen, die bei den bisher bekannten Ausführungen hinter den Lastzonen lagen, wird vermieden.

Der in Fig. 3 gezeigte Käfig 30, zur Führung der Rollen 18 und 18' besitzt im Bereich der Rücklaufzone 21 eine Öffnung 35. Dadurch ergibt sich ein leicht herstellbarer Käfig 30, in dem die Rollen 18' auch in der Rücklaufzone 21 leicht montiert werden können. Damit nun aber insbesondere während des Zusammenbaus des Lagers das Herausfallen der Rollen 18' aus dem Käfig 30 verhindert wird, ist die Öffnung 35 mit einem Halteblech 36 abgedeckt.

Dieses Halteblech setzt sich fort bis in den Bereich der Lastzone 19 und steht hier mit verlängerten Abschnitten 37 und herausgebogenen Abschnitten 38 den hier angeordneten Rollen 28 gegenüber und bewirkt so auch in diesem Bereich eine Halterung der Rollen 18 im Käfig 30 bzw. am Gehäuse 20. Es ergibt sich somit eine mit einfachen Mitteln herstellbare und gut handhabbare Baueinheit für alle Teile mit Ausnahme der Laufschiene 17.

## Patentansprüche

1. Linearlager für unbegrenzte Längsbewegungen, bestehend aus einer Laufschiene mit mindestens einer Laufbahn und einem auf ihr über Rollen bewegbar abgestützten Gehäuse, wobei mindestens ein geschlossener Rollenumlauf vorgesehen ist, der aus einer Lastzone, zwei Umlenkbereichen und einer Rücklaufzone besteht, dadurch gekennzeichnet, dass

a. sich die Lastzone zwischen der Laufschiene (1, 17, 26) und den Rollen (10, 18, 32) auf der inneren Seite der von den umlaufenden Rollen beschriebenen Bahn befindet

b. die Lastzone (11, 31) mit der Rücklaufzone (15, 32) durch zwei jeweils einen in etwa schraubenlinienförmig gekrümmten Teilbereich (34') aufweisende Umlenkbereiche (34) verbunden ist (Fig. 6)

c. die Schnittebene (22) durch die Rollenmitte senkrecht zu den Rollendrehachsen (23) aller tragenden Rollen (18) und die Schnittebene (24) durch die Rollenmitte senkrecht zur Rollendrehachse (25) aller Rollen (18') in der Rücklaufzone (21) des Rollenumlaufs sich längs der mit «A» bezeichneten, parallel zur Lastzone (19) verlaufenden Achse schneiden und dass der von der Achse «A» in Richtung auf die tragenden (18) und unbelasteten (18') Rollen gebildeten Winkel α zwischen den Schnittebenen (22) und (24) grösser ist als 15° und kleiner als 60° (Fig. 3).

2. Linearlager nach Anspruch 1, dadurch gekennzeichnet, dass beide Umlenkbereiche (34) etwa schraubenlinienförmig gekrümmte Teilbereiche (34') besitzen, an welche sich zweidimensional gekrümmte Abschnitte (33) anschliessen, wobei in den Abschnitten (33) die Drehachsen der Rollen (27) parallel zu den Drehachsen der Rollen (27) in der Rücklaufzone (32) angeordnet sind (Fig. 6).

3. Linearlager nach Anspruch 1 oder 2, dadurch gekennzeichnet, dass der Winkel α zwischen den Schnittebenen (22) und (24) 40° bis 50° beträgt (Fig. 3).

4. Linearlager nach Anspruch 1, 2 oder 3, dadurch gekennzeichnet, dass vier Umläufe mit Rollen (27) vorgesehen sind.

5. Linearlager nach Anspruch 4, dadurch gekennzeichnet, dass alle Umläufe innerhalb des Hauptquerschnitts der Laufschiene (26) angeordnet sind (Fig. 4).

6. Linearlager nach Anspruch 1 bis 5, dadurch gekennzeichnet, dass die Rollen (18, 18') in einem Käfig (30) angeordnet sind, der im Bereich der Rücklaufzone (21) eine einseitige Öffnung (35) besitzt (Fig. 3).

7. Linearlager nach Anspruch 6, dadurch gekennzeichnet, dass die Öffnung (35) des Käfigs (30) zumindest teilweise mit einem Halteblech (36) abgedeckt ist (Fig. 3).

8. Linearlager nach Anspruch 7, dadurch gekennzeichnet, dass das die Öffnung (35) abdeckende Halteblech (36) verlängerte (37) und/oder herausgebogene Halteabschnitte (38) aufweist (Fig. 3).

## Claims

1. A linear bearing for unrestricted longitudinal movement, comprising a roller rail having at least one race and a casing movably mounted thereon via rollers, at least one closed roller circuit being provided and comprising a load zone, two reversing regions and a return zone, characterised in that

a. the load zone is located between the roller rail (1, 17, 26) and the rollers (10, 18, 32) on the inner side of the race over which the surrounding rollers run, b. the load zone (11, 31) and the return zone (15, 32) are connected by two reversing regions (34) each having a substantially helically curved partial region (34'), (Fig. 6), and

c. the sectional plane (22) through the centre of the rollers perpendicular to the axes (32) of rotation of all the bearing rollers (18) and the sectional plane (24) through the roller centre perpendicular to the axis of rotation (25) of all the rollers (18') in the return zone (21) of the roller circuit intersect along the axis marked «A» and extending parallel to the load zone (19), and the angle α between the sectional planes (22 and 24) formed by the axis «A» in the direction towards the bearing roller (18) and the unloaded roller (18') is greater than 15° and less than 60° (Fig. 3).

2. A linear bearing according to claim 1, characterised in that both reversing regions (34) have approximately helically curved partial regions (34') adjacent two-dimensionally curved portions (33) and in the portions (33) the axes of rotation of the rollers (27) are disposed parallel to the axes of rotation of the rollers (27) in the return zone (Fig. 6).

3. A linear bearing according to claim 1 or 2, characterised in that the angle α between the sectional planes (22 and 24) is 40° to 50° (Fig. 3).

4. A linear bearing according to claim 1, 2 or 3, characterised in that four circuits of rollers (27) are provided, and the axes of rotation (29) near the load zones (31) are so disposed as to give an arrangement in the form of an X or O (Fig. 4).

5. A linear bearing according to claim 4, characterised in that all circuits are disposed within the main cross-section of the rail (26) (Fig. 4).

6. A linear bearing according to claim 1 to 5, characterised in that the rollers (18, 18') are disposed in a cage 30 having an opening (35) on one side in the return zone (Fig. 3).

7. A linear bearing according to claim 6, characterised in that the opening (35) in the cage (30) is at least partly covered by a washer (36) (Fig. 3).

8. A linear bearing according to claim 7, characterised in that the washer (36) covering the opening (35) has prolonged (37) and/or outwardly bent retaining portions (38) (Fig. 3).

## Revendications

1. Palier rectiligne pour déplacements longitudinaux illimités, constitué par un rail de roulement comportant au moins un chemin de roulement et un carter supporté par lui avec possibilité de déplacement par l'intermédiaire de rouleaux, un circuit fermé de circulation des rouleaux au moins étant prévu, celui-ci comprenant une zone de charge, deux regions de chagement de direction et une zone de retour, caractérisé en ce que:

a. la zone de charge entre le rail de roulement (1, 17, 26) et les rouleaux (10, 18, 32) se trouve sur le côté intérieur du chemin décrit par les rouleaux en circulation

b. la zone de charge (11, 31) est reliée à la zone de retour (15, 32) par deux régions de changement de direction (34) comportant chacune une partie (34') incurvée, sensiblement en forme d'hélice (fig. 6)

c. le plan de coupe (22) passant par le milieu des rouleaux, perpendiculairement aux axes de rotation (23) de tous les rouleaux porteurs (18), et le plan de coupe (24) passant par le milieu des rouleaux perpendiculairement à l'axe (25) de rotation de tous les rouleaux (18') dans la zone de retour (21) du circuit de circulation des rouleaux se coupent le long de l'axe, désigné par «A» et parallèle à la zone de charge (19), et l'angle α, formé en direction des rouleaux porteurs (18) et des rouleaux non chargés (18), entre les plans de coupe (22) et (24), est supérieur à 15° et inférieur à 60° (fig. 3).

2. Palier rectiligne selon la revendication 1, caractérisé en ce que les deux parties de changement de direction (34) comportent des parties incurvées hélicoïdalement (34'), auxquelles se raccordent des parties bidimensionnelles incurvées (33), les axes de rotation des rouleaux (27) dans les parties (33) étant disposés parallèlement aux axes de rotation des rouleaux (27) dans la zone de retour (32).

3. Palier rectiligne selon la revendication 1 ou 2, caractérisé en ce que l'angle α entre les plans de coupe (22 et 24) est de 40° à 50° (fig. 3).

4. Palier rectiligne selon la revendication 1, 2 ou 3, caractérisé en ce qu'il comporte quatre circuits de circulation avec des rouleaux (27), les axes de rotation (29) dans la région des zones de charge (31) étant disposés de façon à obtenir une disposition en X ou en O (fig. 4).

5. Palier rectiligne selon la revendication 4, caractérisé en ce que tous les circuits de circulation sont disposés à l'intérieur de la section transversale principale du rail de roulement (26) (fig. 4).

6. Palier rectiligne selon l'une des revendications 1 à 5, caractérisé en ce que les rouleaux (18, 18') sont disposés dans une cage (30), qui possède, dans la région de la zone de retour (21), une ouverture (35) d'un côté (fig. 3).

7. Palier rectiligne selon la revendication 6, caractérisé en ce que l'ouverture (35) de la cage (30) est recouverte, au moins en partie, par une tôle de maintien (36).

8. Palier rectiligne selon la revendication 7, caractérisé en ce que la tôle de maintien (36) recouvrant l'ouverture (35) comporte des parties de maintien en prolongement (37) et/ou recourbées (38) (fig. 3).

Figur 1

Figur 2

Figur 3

Figur 4

Figur 5

Figur 6